# EUROPEAN PATENT SPECIFICATION

(11) **EP 1 800 280 B1**
(45) Date of publication and mention of the grant of the patent: **28.12.2011**
(21) Application number: 05786721.0
(22) Date of filing: 30.09.2005
(51) Int. Cl.: G09F 9/00, G09F 9/35, G09F 9/30, G09F 11/29

(54) **ROLLABLE DISPLAY DEVICE**
AUFROLLBARE ANZEIGEVORRICHTUNG
DISPOSITIF D'AFFICHAGE ENROULABLE

(30) Priority: 05.10.2004 US 616096 P; 04.04.2005 US 667971 P
(43) Date of publication of application: 27.06.2007
(60) Divisional application: 11178663.8
(73) Proprietor: Creator Technology B.V., 4837 BN Breda (NL)
(72) Inventor: BEMELMANS, David J. E., NL-5621 BA Eindhoven (NL); HUITEMA, Hjalmar E. A., NL-5621 BA Eindhoven (NL); LAFARRE, Raymond W., NL-5621 BA Eindhoven (NL); SCHELLINGERHOUT, Nicolaas W., NL-5621 BA Eindhoven (NL)
(74) Representative: Goddar, Heinz J.
(86) International application number: PCT/IB2005/053234
(87) International publication number: WO 2006/038171

(56) References cited:
- WO-A-2004/053818
- US-A1- 2001 003 450
- US-A1- 2002 070 910
- PATENT ABSTRACTS OF JAPAN vol. 1997, no. 12, 25 December 1997 (1997-12-25) & JP 09 216465 A (DAINIPPON PRINTING CO LTD), 19 August 1997 (1997-08-19)
- PATENT ABSTRACTS OF JAPAN vol. 2003, no. 12, 5 December 2003 (2003-12-05) & JP 2003 250074 A (KONICA CORP), 5 September 2003 (2003-09-05)

## Description

This invention relates generally to rollable display devices, and more specifically to rollable display devices providing an extended planar display. More specifically, the present invention relates to a rollable display device according to the preamble of claim 1. A display device of this type is known from US 2001/0003450 A1. Another related display device is described in WO 2004/053818 A1.

Miniaturization and increased processing power has recently allowed great increases in the portability of electronics. Complex devices have been reduced to pocket size. Wherever they desire, consumers are able to carry and use such devices as cellular telephones, music players, game players, still and motion digital cameras, and GPS locators. Still, the size and form factor of the devices is often limited by the optical display because most devices currently use an inflexible glass optical display. Such displays are bulky, heavy, expensive, and fragile. Fragility increases with increasing display size, but limiting display size reduces the usefulness of the device. Content requiring high resolution, such as maps, cannot be shown on a small display.

To obtain greater portability and avoid the drawbacks of glass optical displays, rollable displays have been developed. Rollable displays are typically made of a flexible material that can be rolled about a cylinder in a housing for storage when not in use. To use the rollable display, the user pulls an exposed end of the rollable display with one hand while grasping the housing with the other hand. The rollable display unrolls to display the content desired. The very flexibility that allows the rollable display to roll into a compact shape gives rise to a problem: the user must continue to support and hold taut the rollable display to view the content. This pose is not only inconvenient, but also limits the users ability to interact with the device. Both hands are occupied, so the user cannot press buttons on the device. Design options are also limited: the rollable display cannot be a touch screen, since the user does not have a free hand to touch the screen.

Various arrangements have been proposed to hold the rollable display in the extended position for use, but stability has typically been lacking. One end of the rollable display is usually attached to an electronics package and the other end extended away from the electronics package is left unsupported or minimally supported. The extended end can easily be bent or blown about. The extended end can also be twisted, so that the axis of the electronics package end and the axis of the extended end are not parallel. Twisting makes the display hard to read due to reflection concentrated on the display and variation in viewing angle over the surface.

It would be desirable to have a rollable display device that overcomes the above disadvantages.

The present invention provides a rollable display device according to claim 1. Preferred embodiments are defined in the dependent claims.

The foregoing and other features and advantages of the invention will become further apparent from the following detailed description of the presently preferred embodiment, read in conjunction with the accompanying drawings. The detailed description and drawings are merely illustrative of the invention rather than limiting, the scope of the invention being defined by the appended claims and equivalents thereof.
FIG. 1 is a perspective view in the extended configuration of a rollable display device made in accordance with the present invention;
FIG. 2 is a perspective view in the rolled configuration of a rollable display device made in accordance with the present invention;
FIG. 3 is a front cross section view of a rollable display device made in accordance with the present invention;
FIG. 4 is a transverse cross section view of a rollable display device made in accordance with the present invention;
FIG. 5 is a detail view of a holding mechanism for a rollable display device made in accordance with the present invention.

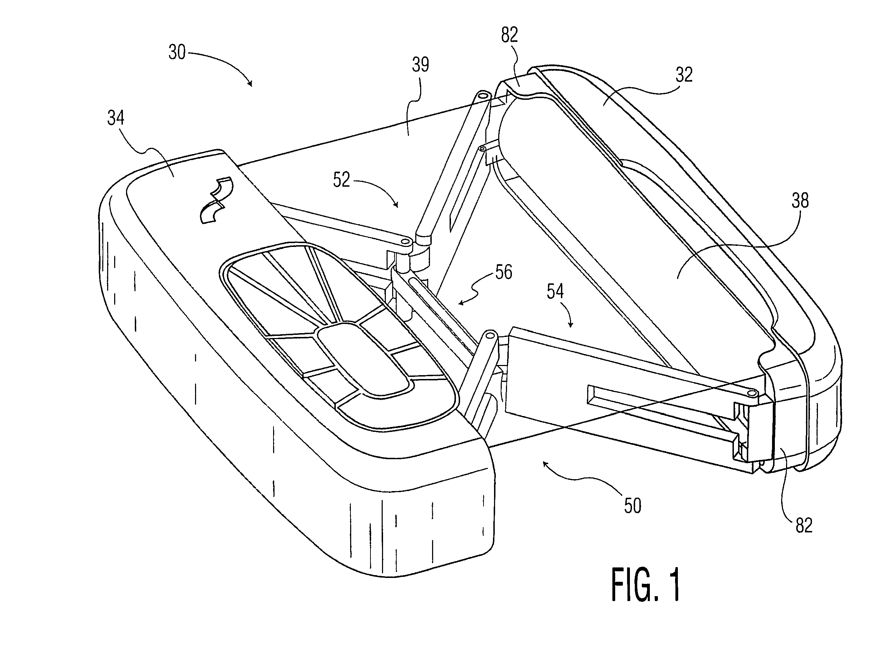

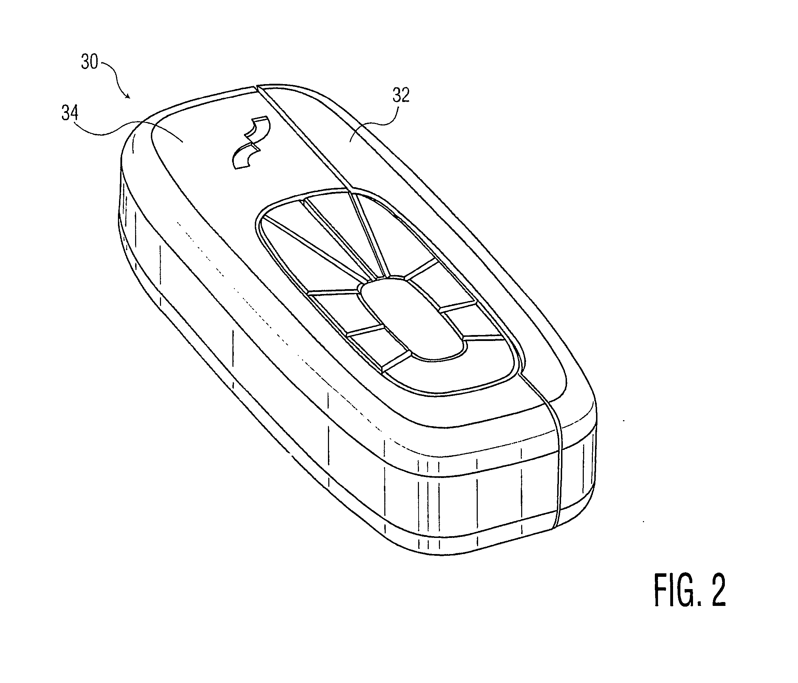

FIGS. 1 - 5, in which like elements share like reference numbers, are views of a rollable display device made in accordance with the present invention. Rollable display device 30 has an extended configuration as shown in FIG. 1 in which a rollable display 38 is rolled out to display information to the user, and has a rolled configuration as shown in FIG. 2 in which the rollable display 38 is rolled away within the housings for portability and protection. The viewing portion 39 of the rollable display 38 is maintained within a plane in the extended configuration to prevent twisting or bending of the rollable display 38. As used herein, the terms "extended" and "extended configuration" are defined as the configuration in which the housings of the rollable display device 30 are separated and the viewing portion 39 of the rollable display 38 is extended and visible to the user. The terms "rolled" and "rolled configuration" are defined as the configuration in which the housings of the rollable display device 30 are joined and the viewing portion 39 of the rollable display 38 is rolled for storage and not visible to the user. The rollable display device 30 can be any electronic device displaying information, such as a global positioning system (GPS) receiver, a mobile telephone, a personal digital assistant (PDA), an eBook reader, a photo viewer, an MP3 player, a news alert viewer, a streaming video viewer, a video teleconferencing device, a remote control, an entertainment program guide, or the like.

The rollable display device 30 includes a first housing 32, a second housing 34, an electronic package 36, a rollable display 38, and a spreader mechanism 50. The spreader mechanism 50 maintains the viewing portion 39 of the rollable display 38 in a planar configuration when the rollable display 38 is extended. The viewing portion 39 is shown as transparent for clarity of illustration, although the viewing portion 39 displays graphical information and can be opaque. The first housing 32 includes a roll frame 40 for supporting and retaining the rollable display 38. The first housing 32 and the second housing 34 are mateable and include a first space 42 and a second space 44, respectively. In the rolled configuration, the first space 42 and the second space 44 form a cavity within the housing accepting the rollable display 38. One end of the rollable display 38 is connected at the second housing 34. The rollable display 38 is operably connected to the electronic package 36 to display information from the electronic package 36. The end of the rollable display 38 can be physically connected to the second housing 34 and/or the electronic package **36.** The electronic package **36** generating a graphical information signal and the rollable display **38** is responsive to the graphical information signal to display graphical information. The spreader mechanism **50** includes a first leg assembly **52** connected between the first housing **32** and the second housing **34**, a second leg assembly **54** connected between the first housing **32** and the second housing **34**, and a joining assembly **56** connected between the first leg assembly **52** and the second leg assembly **54.**

The rollable display **38** can be any flexible rollable display able to display graphical information, such as electronic paper, an E ink display, a polymer vision display, an electrowetting display, a polymer light-emitting diode (PolyLED) display, an organic light-emitting diode (OLED) display, a stratified liquid crystal (LC) display, or the like. The rollable display **38** can include hardware, such as springs, spindles, bushings, electromotors, and the like, as required to install the rollable display **38** within the roll frame **40** and control the static and dynamic forces when rolling and unrolling the viewing portion **39** of the rollable display **38.** The electronic package **36** can be any electronic package for a device such as a global positioning system (GPS) receiver, a mobile telephone, a personal digital assistant (PDA), Personal Computer an eBook reader, and the like an electronic package for a component of such a device.

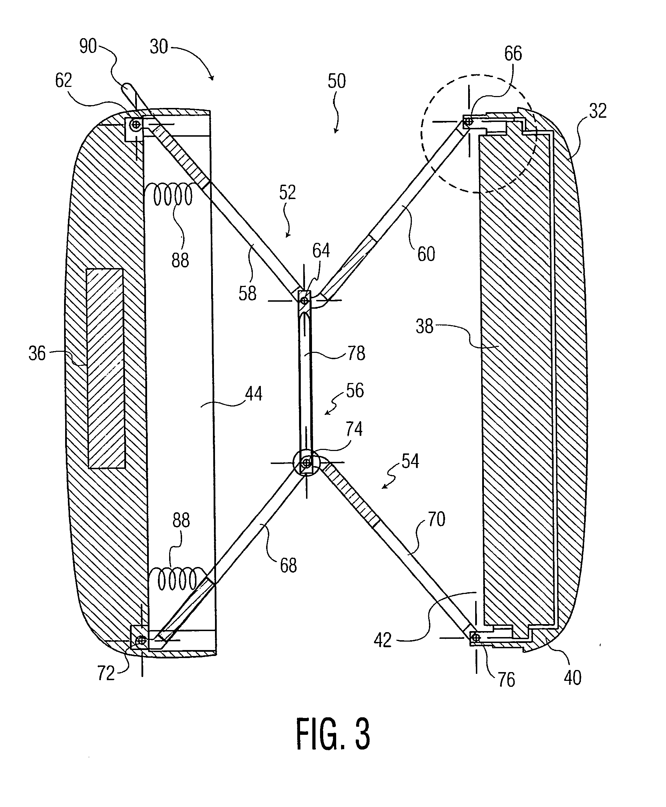

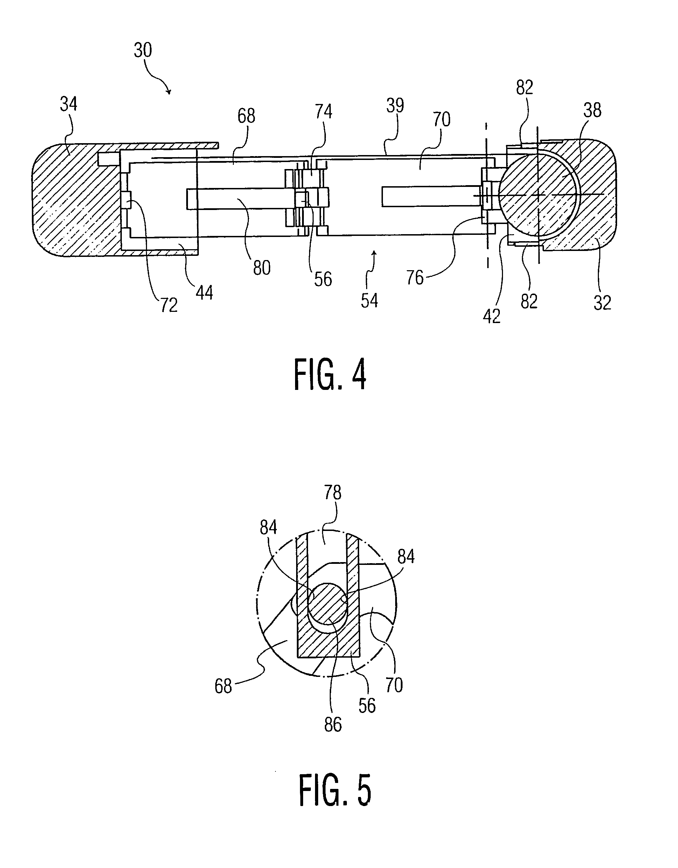

Referring to **FIGS. 3** & **4****,** the first leg assembly **52** includes a first leg **58** and a second leg **60.** The first leg **58** is attached to the second housing **34** through knuckle-hinge joint **62** and to the second leg **60** through knuckle-hinge joint **64.** The second leg **60** is attached to the first housing **32** through knuckle-hinge joint **66.** Similarly, the second leg assembly **54** includes a third leg **68** and a fourth leg **70.** The third leg **68** is attached to the second housing **34** through knuckle-hinge joint **72** and to the fourth leg **70** through knuckle-hinge joint **74.** The fourth leg **70** is attached to the first housing **32** through knuckle-hinge joint **76.** The joining assembly **56** has a groove **78** along its length. The joining assembly **56** is pivotably attached to the first leg assembly **52** through the pin of the knuckle-hinge joint **64.** The joining assembly **56** is slidably attached to the second leg assembly **54** through location of the pin of the knuckle-hinge joint **74** in the groove **78.** The joining assembly **56** is disposed in a slot **80** of the third leg **68** when the rollable display device **30** is in the rolled configuration. In an alternative embodiment, the fourth leg **70** can include the slot to receive the joining assembly **56** when the rollable display device **30** is in the rolled configuration.

The use of the knuckle-hinge joints in this example of the rollable display device **30** maintains the rollable display **38** within a plane as the rollable display device **30** is in an intermediate configuration between the rolled configuration and the extended configuration, and when the rollable display **38** is in the extended configuration. In the rolled configuration, the first leg **58** and the second leg **60** are substantially parallel, as are the third leg **68** and the fourth leg **70**. The joining assembly **56** is disposed in the slot **80** of the third leg **68**. Those skilled in the art will appreciate that the legs can be considered substantially parallel as long as any angle between the legs does not restrict motion between the rolled configuration and the extended configuration. In one embodiment, the first housing **32** includes a mating surface **82** for coupling the first housing **32** and the second housing **34** when the rollable display device **30** is in the rolled configuration. In the extended configuration, the joining assembly **56** limits the travel of the first leg assembly **52** and the second leg assembly **54**: the pin **86** of the knuckle-hinge joint **74** slides in the groove **78** of the joining assembly **56** until reaching the end of the groove **78**. **FIG**. **5** shows detail of the pin at the end of the groove **78.** In one embodiment, the joining assembly **56** includes one or more nubs **84** protruding into the groove **78** to act as a holding mechanism for the pin **86**. The nubs **84** provide resistance to the travel of the pin **86** in the **78**. Those skilled in the art will appreciate that the size and profile of the nubs **84** to provide the desired holding power, resistance magnitude, and/or directional dependant resistance.

Referring to **FIG**. **3**, opening and closing forces can be selected to provide the desired opening and closing action. The rollable display **38** is typically spring loaded to roll the display and to hold the viewing portion of the rollable display **38** taut when the rollable display device **30** is in the extended configuration. The same spring loading urges the first housing **32** toward the second housing **34**, providing a closing force. The opening force urging the first housing **32** away from the second housing **34** can be provided by various arrangements. In one embodiment, springs **88** are located between the legs and their associated housing, pushing the first leg **58** and the third leg **68** away from the second housing **34** in this example. Those skilled in the art will appreciate that many spring arrangements can be used to provide the opening and closing forces. For example, a spring in parallel with the joining assembly **56** between the first leg assembly **52** and the second leg assembly **54** can be used in compression to provide an opening force or used in tension to provide a closing force. Springs can be provided on the side of the legs **58,** 68 opposite the springs **88** to provide a closing force. In another example, the springs can be located across the spreader mechanism **50,** such as between the first leg **58** and the third leg **68,** between the first leg **58** and the second leg **60,** or the like. The various spring arrangements can be used individually or in combination to accomplish a particular result. The springs can be any spring able to provide a force, such as mechanical springs, pneumatic springs, or the like.

Scaling the opening and closing forces provides the desired opening and closing action. When the opening force exceeds the closing force, the first housing **32** and the second housing **34** spring apart from the rolled configuration to the extended configuration on release of a catch assembly (not shown) holding the first housing **32** and the second housing **34** together. To return to the rolled configuration, the first housing **32** and the second housing **34** can be pushed together until the catch engages. When the closing force exceeds the opening force, the first housing **32** and the second housing **34** spring together from the extended configuration to the rolled configuration on release of a catch assembly (not shown) holding the first housing **32** and the second housing **34** apart. To return to the extended configuration, the first housing **32** and the second housing **34** can be pulled apart until the catch engages.

When the forces are balanced so that the opening force is approximately equal to the closing force, the first housing **32** and the second housing **34** remain in their existing configuration until additional force is applied, i.e., the rollable display device **30** stays in a rolled, intermediate, or extended configuration indefinitely. Those skilled in the art will appreciate that forces can be considered approximately equal as long as any difference is on the order of frictional forces in the system, which depend on the particular mechanisms used, such as the bushings, bearings, and dampers. In one example, frictional forces can be about 0.1 to 0.5 Newtons when the closing force is about 1.0 Newtons. Balanced forces permit easy switching between the rolled and extended configurations by gently pulling or pushing the first and second housings **32**, **34** to the desired configuration. Balanced forces also permit use of a single-handed control to move between the rolled and extended configurations. In the example of **FIG**. **3**, the single-handed control is a lever extension **90** continuing the first leg **58** through the outside of the second housing **34**. The user can hold the second housing **34** in one hand and pull the lever extension **90** away from the first housing 32 with a thumb to switch the rollable display device 30 from a rolled to an extended configuration. The user can hold the second housing 34 in one hand and push the lever extension 90 toward the first housing 32 with a thumb to switch the rollable display device 30 from an extended to a rolled configuration. The lever extension 90 is but one example of a single-handed control: many combinations of linkages, levers, and buttons can be used to apply the additional opening and closing forces to the balanced forces, switching between the rolled and extended configurations. In one embodiment, the single- handed control can actuate a switch to energize the electronic package 36 when the single- handed control is actuated to extend the rollable display 38 from the rolled configuration to the extended configuration.

Those skilled in the art will appreciate that the various parameters affecting the static and dynamic behavior of the rollable display device, such as spring forces, dampers, bearing friction, and the like, can be varied to achieve the desired opening and closing action. For example, a damper including two bushings can be installed between the rollable display 38 and the roll frame 40, with one bushing attached to each on the axis and a small grease-filled gap between the bushings. Electromotors can also be included to provide opening and closing forces.

## Claims

1. A rollable display device comprising:
a first housing (32);
a second housing (34), the second housing (34) being mateable with the first housing (32);
an electronic package (36), the electronic package (36) being disposed within at least one of the first housing and the second housing (34);
a roll frame (40), the roll frame (40) being coupled to the first housing (32);
a rollable display (38), the rollable display (38) being rotatably disposed within the roll frame (40), having one end connected at the second housing (34), and being operably connected to the electronic package (36) to display information from the electronic package (36); and
a spreader mechanism (50), the spreader mechanism (50) having a first leg assembly (52), a second leg assembly (54), and a joining assembly (56);
wherein the first leg assembly (52) couples the first housing (32) and the second housing (34), the second leg assembly (54) couples the first housing (32) and the second housing (34), and the joining assembly (56) couples the first leg assembly (52) and the second leg assembly (54);
**characterized in that** the first leg assembly (52) comprises a first leg (58) and a second leg (60) coupled by a first knuckle-hinge joint (64), the second leg assembly (54) comprises a third leg (68) and a fourth leg (70) coupled by a second knuckle-hinge joint (74), and the joining assembly (56) is coupled to the first leg assembly (52) by the first knuckle-hinge joint (64) and is coupled to the second leg assembly (54) by the second knuckle-hinge joint (74);
wherein the joining assembly (56) has a groove (78), and the second knuckle-hinge joint (74) has a pin (86) slidably disposed in the groove (78).

2. The device of claim 1 wherein the groove (78) has a nub (84) near an end of the groove (78) opposite the first knuckle-hinge joint (64), the nub (84) holding the pin (86) when the rollable display (38) is extended.

3. The device of claim 1 wherein one of the third leg (68) and the fourth leg (70) has a slot (80) receiving the joining assembly (56) when the rollable display (38) is rolled.

4. The device of one of the preceding claims wherein the first leg assembly (52) comprises a first leg (58) and a second leg (60), the second leg assembly (54) comprises a third leg (68) and a fourth leg (70), the first leg (58) is substantially parallel the third leg (68), and the second leg (60) is substantially parallel the fourth leg (70).

5. The device of claim 4 wherein the third leg (68) is coupled to the joining assembly (56) at a first pivot (174), the fourth leg (70) coupled to the joining assembly (56) at a second pivot (175), the third leg (68) has a first tooth wheel (180) disposed about the first pivot (174), and the fourth leg (70) has a second tooth wheel (180) disposed about the second pivot (175), the first tooth wheel (180) being engaged with the second tooth wheel (180).

6. The device of claim 4 wherein the third leg (68) is coupled to the joining assembly (56) at a first pivot (174), the fourth leg (70) is coupled to the joining assembly (56) at a second pivot (175), the third leg (68) has a first angled stop (182) disposed about the first pivot (174), the fourth leg (70) has a second angled stop (182) disposed about the second pivot (175), and the first angled stop (182) engages the second angled stop (182) when the rollable display (38) is extended.

7. The device of claim 4 wherein the first leg (58) is coupled to the second housing (34) at a pivot (162) and the first leg (58) has an extension (184) rotatable about the pivot (162), further comprising a spring (188) operably connected between the extension (184) and the second housing (34) to urge the rollable display (38) toward an extended configuration.

8. The device of one of the preceding claims wherein the rollable display (38) has a roller spring (194) to apply a closing force to urge the rollable display (38) toward a rolled configuration.

9. The device of claim 8 further comprising at least one spring operably connected to the spreader mechanism (50) to apply an opening force to urge the rollable display (38) toward a rolled configuration.

10. The device of claim 8 further comprising at least one spring operably connected the spreader mechanism (50) to apply an opening force to urge the rollable display (38) toward an extended configuration.

11. The device of claim 10 wherein the at least one spring is connected to the spreader mechanism (50) at a location selected from the group consisting of a location across the spreader mechanism (50), and a location between the spreader mechanism (50) and at least one of the first housing (32) and the second housing (34).

12. The device of claim 10 wherein the opening force is greater than the closing force.

13. The device of claim 12 further comprising a catch assembly (196) operably connected between the first housing (32) and the second housing (34), the catch assembly (196) maintaining the rollable display (38) in the rolled configuration when the catch assembly (196) is engaged.

14. The device of claim 10 wherein the opening force is less than the closing force.

15. The device of claim 14 further comprising a catch assembly (198) operably connected to the spreader mechanism (50), the catch assembly (198) maintaining the rollable display (38) in the extended configuration when the catch assembly (198) is engaged.

16. The device of claim 10 wherein the opening force is approximately equal to the closing force.

17. The device of claim 16 further comprising a single-handed control operably connected to the spreader mechanism (50).

18. The device of claim 17 wherein the electronic package (36) is energized in response to actuation of the single-handed control to extend the rollable display (38) from the rolled configuration.

19. The device of claim 10 wherein the opening force and the closing force are approximately equal for a first travel portion, and the opening force and the closing force are unequal for a second travel portion.

20. The device of one of the preceding claims wherein the electronic package (36) is an electronics package for a device selected from the group of consisting of a global positioning system (GPS) receiver, a mobile telephone, a personal digital assistant (PDA), an eBook reader, a photo viewer, an MP3 player, a news alert viewer, a streaming video viewer, a video teleconferencing device, a remote control, and an entertainment program guide.

## Patentansprüche

1. Rollbare Anzeigeeinrichtung mit:
einem ersten Gehäuse (32);
einem zweiten Gehäuse (32), wobei das zweite Gehäuse (34) mit dem ersten Gehäuse (32) in Passung gebracht werden kann;
einem elektronischen Bauteil (36), wobei das elektronische Bauteil (36) innerhalb wenigstens des ersten Gehäuses oder des zweiten Gehäuses (34) angeordnet ist;
einem Rollrahmen (40), wobei der Rollrahmen (40) mit dem ersten Gehäuse (32) gekoppelt ist;
einer rollbaren Anzeige (38), wobei die rollbare Anzeige (38) innerhalb des Rollrahmens (40) drehbar angeordnet ist, ein mit dem zweiten Gehäuse (34) verbundenes Ende aufweist und mit dem elektronischen Bauteil (36) funktional gekoppelt ist, um Information von dem elektronischen Bauteil (36) anzuzeigen; und
einem Spreizmechanismus (50), wobei der Spreizmechanismus (50) eine erste Armanordnung (52), eine zweite Armanordnung (54) und eine Verbindungsanordnung (56) aufweist,
wobei die erste Armanordnung (52) das erste Gehäuse (32) und das zweite Gehäuse (34) koppelt, die zweite Armanordnung (54) das erste Gehäuse (32) und das zweite Gehäuse (34) koppelt und die Verbindungsanordnung (56) die erste Armanordnung (52) und die zweite Armanordnung (54) koppelt;
**dadurch gekennzeichnet, dass** die erste Armanordnung (52) einen ersten Arm (58) und einen zweiten Arm (60) aufweist, die über ein Scharniergelenk (64) gekoppelt sind, die zweite Armanordnung (54) einen dritten Arm (68) und einen vierten Arm (70) aufweist, die über ein zweites Scharniergelenk (74) gekoppelt sind, und die Verbindungsanordnung (56) mit der ersten Armanordnung (52) über das erste Scharniergelenk (64) und mit der zweiten Armanordnung (54) über das zweite Scharniergelenk (74) gekoppelt ist;
wobei die Verbindungsanordnung (56) eine Rille (78) aufweist und das zweite Scharniergelenk (74) einen Stift (86) aufweist, der in der Rille (78) verschiebbar angeordnet ist.

2. Vorrichtung nach Anspruch 1, wobei die Rille (78) ein Kernstück (84) in der Nähe eines Endes der Rille (84), das dem ersten Scharniergelenk (64) gegenüberliegt, aufweist, wobei das Kernstück (84) den Stift (86) hält, wenn die rollbare Anzeige (38) ausgebreitet ist.

3. Vorrichtung nach Anspruch 1, wobei der dritte Arm (68) oder der vierte Arm (70) einen Schlitz (80) aufweist, der die Verbindungsanordnung (56) aufnimmt, wenn die rollbare Anzeige (38) aufgerollt ist.

4. Vorrichtung nach einem der vorangehenden Ansprüche, wobei die erste Armanordnung (52) einen ersten Arm (58) und einen zweiten Arm (60) aufweist, die zweite Armanordnung (54) einen dritten Arm (68) und einen vierten Arm (70) aufweist, der erste Arm (58) im Wesentlichen parallel zu dem dritten Arm (68) ist und der zweite Arm (60) im Wesentlichen parallel zu dem vierten Arm (70) ist.

5. Vorrichtung nach Anspruch 4, wobei der dritte Arm (68) mit der Verbindungsanordnung (56) bei einem ersten Drehpunkt (174) gekoppelt ist, der vierte Arm (70) mit der Verbindungsanordnung (56) bei einem zweiten Drehpunkt (175) gekoppelt ist, der dritte Arm (68) ein erstes Zahnrad (180) aufweist, das um den ersten Drehpunkt (174) herum angeordnet ist, und der vierte Arm (70) ein zweites Zahnrad (180) aufweist, das um den zweiten Drehpunkt (175) herum angeordnet ist, wobei das erste Zahnrad (180) mit dem zweiten Zahnrad (180) kämmt.

6. Vorrichtung nach Anspruch 4, wobei der dritte Arm (68) mit der Verbindungsanordnung (56) bei einem ersten Drehpunkt (174) gekoppelt ist, der vierte Arm (70) mit der Verbindungsanordnung (56) bei einem zweiten Drehpunkt (175) gekoppelt ist, der dritte Arm (68) einen ersten Winkelanschlag (182) aufweist, der um den ersten Drehpunkt (174) herum angeordnet ist, der vierte Arm (70) einen zweiten Winkelanschlag (182) aufweist, der um den zweiten Drehpunkt (175) herum angeordnet ist, und der erste Winkelanschlag (182) mit dem zweiten Winkelanschlag (182) in Eingriff ist, wenn die rollbare Anzeige (38) ausgebreitet ist.

7. Vorrichtung nach Anspruch 4, wobei der erste Arm (58) mit dem zweiten Gehäuse (34) bei einem Drehpunkt (162) gekoppelt ist und der erste Arm (58) eine Verlängerung (184) aufweist, die um den Drehpunkt (162) drehbar ist, und mit ferner einer Feder (188), die zwischen der Verlängerung (184) und dem zweiten Gehäuse (34) gekoppelt ist, um die rollbare Anzeige (38) in Richtung der ausgebreiteten Konfiguration zu drücken.

8. Vorrichtung nach einem der vorangehenden Ansprüche, wobei die rollbare Anzeige (38) eine Rollfeder (194) aufweist, um eine Schließkraft aufzubringen, um die rollbare Anzeige (38) in Richtung einer aufgerollten Konfiguration zu drücken.

9. Vorrichtung nach Anspruch 8, mit ferner wenigstens einer Feder, die mit dem Spreizmechanismus (50) gekoppelt ist, um eine Öffnungskraft aufzubringen, um die rollbare Anzeige (38) in Richtung einer aufgerollten Konfiguration zu drücken.

10. Vorrichtung nach Anspruch 8, mit ferner wenigstens einer Feder, die mit dem Spreizmechanismus (50) gekoppelt ist, um eine Öffnungskraft aufzubringen, um die rollbare Anzeige (38) in Richtung einer ausgebreiteten Konfiguration zu drücken.

11. Vorrichtung nach Anspruch 10, wobei die wenigstens eine Feder mit dem Spreizmechanismus (50) bei einer Position gekoppelt ist, welche unter folgenden Positionen ausgewählt ist: eine Position auf dem Spreizmechanismus (50) und eine Position zwischen dem Spreizmechanismus (50) und wenigstens dem ersten Gehäuse (32) oder dem zweiten Gehäuse (34).

12. Vorrichtung nach Anspruch 10, wobei die Öffnungskraft größer ist als die Schließkraft.

13. Vorrichtung nach Anspruch 12, mit ferner einer Schließanordnung (196), die zwischen dem ersten Gehäuse (32) und dem zweiten Gehäuse (34) gekoppelt ist, wobei die Schließanordnung (196) die rollbare Anzeige (38) in der aufgerollten Konfiguration hält, wenn die Schließanordnung (196) eingerastet ist.

14. Vorrichtung nach Anspruch 10, wobei die Öffnungskraft geringer ist als die Schließkraft.

15. Vorrichtung nach Anspruch 14, mit ferner einer Schließanordnung (198), die mit dem Spreizmechanismus (50) gekoppelt ist, wobei die Schließanordnung (198) die rollbare Anzeige (38) in der ausgebreiteten Konfiguration hält, wenn die Schließanordnung (198) eingerastet ist.

16. Vorrichtung nach Anspruch 10, wobei die Öffnungskraft ungefähr gleich der Schließkraft ist.

17. Vorrichtung nach Anspruch 16, mit ferner einer Einhandsteuerung, die mit dem Spreizmechanismus (50) gekoppelt ist.

18. Vorrichtung nach Anspruch 17, wobei das elektronische Bauteil (36) abhängig von der Betätigung der Einhandsteuerung mit Energie versorgt wird, um die rollbare Anzeige (38) aus der aufgerollten Konfiguration auszubreiten.

19. Vorrichtung nach Anspruch 10, wobei die Öffnungskraft und die Schließkraft über einen ersten Bewegungsabschnitt ungefähr gleich sind und über einen zweiten Bewegungsabschnitt ungleich sind.

20. Vorrichtung nach einem der vorangehenden Ansprüche, wobei das elektronische Bauteil (36) ein elektrisches Bauteil für ein Gerät aus der folgenden Gruppe ist: ein Empfänger eines globalen Positionierungssystem (GPS), ein Mobiltelefon, ein elektronischer Assistent (PDA), eine eBook-Leser, ein Foto-Betrachtungsapparat, ein MP3-Spieler, ein Nachrichten-Benachrichtigungs-Leser, ein Streamingvideo-Betrachtungsgerät, ein Videokonferenzgerät, eine Fernsteuerung und Unterhaltungsprogramm-Führer.

## Revendications

1. Dispositif d'affichage enroulable comportant :
un premier boîtier (32) ;
un second boîtier (34), le second boîtier (34) étant en mesure d'être apparié au premier boîtier (32) ;
un module électronique (36), le module électronique (36) étant disposé à l'intérieur d'au moins l'un parmi le premier boîtier et le second boîtier (34) ;
un cadre roulant (40), le cadre roulant (40) étant accouplé au premier boîtier (32) ;
un affichage enroulable (38), l'affichage enroulable (38) étant disposé de manière rotative à l'intérieur du cadre roulant (40), ayant une extrémité raccordée au second boîtier (34), et étant raccordé fonctionnellement au module électronique (36) pour afficher des informations en provenance du module électronique (36) ; et
un mécanisme de déploiement (50), le mécanisme de déploiement (50) ayant un premier ensemble à pattes (52), un second ensemble à pattes (54), et un ensemble de liaison (56) ;
dans lequel le premier ensemble à pattes (52) accouple le premier boîtier (32) et le second boîtier (34), le second ensemble à pattes (54) accouple le premier boîtier (32) et le second boîtier (34), et l'ensemble de liaison (56) accouple le premier ensemble à pattes (52) et le second ensemble à pattes (54) ;
**caractérisé en ce que** le premier ensemble à pattes (52) comporte une première patte (58) et une seconde patte (60) accouplées par un premier assemblage à charnière et à rotule (64), le second ensemble à pattes (54) comporte une troisième patte (68) et une quatrième patte (70) accouplées par un second assemblage à charnière et à rotule (74),
et l'ensemble de liaison (56) est accouplé au premier ensemble à pattes (52) par le premier assemblage à charnière et à rotule (64) et est accouplé au second ensemble à pattes (54) par le second assemblage à charnière et à rotule (74) ;
dans lequel l'ensemble de liaison (56) comprend une rainure (78), et le second assemblage à charnière et à rotule (74) comprend une goupille (86) disposée de manière coulissante dans la rainure (78).

2. Dispositif selon la revendication 1, dans lequel la rainure (78) comprend un tenon (84) à proximité d'une extrémité de la rainure (78) de manière opposée au premier assemblage à charnière et à rotule (64), le tenon (84) tenant la goupille (86) quand l'affichage enroulable (38) est déployé.

3. Dispositif selon la revendication 1, dans lequel l'une parmi la troisième patte (68) et la quatrième patte (70) comprend une fente (80) permettant de recevoir l'ensemble de liaison (56) quand l'affichage enroulable (38) est enroulé.

4. Dispositif selon l'une quelconque des revendications précédentes, dans lequel le premier ensemble à pattes (52) comporte une première patte (58) et une seconde patte (60), le second ensemble à pattes (54) comporte une troisième patte (68) et une quatrième patte (70), la première patte (58) est sensiblement parallèle à la troisième patte (68), et la seconde patte (60) est sensiblement parallèle à la quatrième patte (70).

5. Dispositif selon la revendication 4, dans lequel la troisième patte (68) est accouplée à l'ensemble de liaison (56) au niveau d'un premier pivot (174), la quatrième patte (70) est accouplée à l'ensemble de liaison (56) au niveau d'un second pivot (175), la troisième patte (68) comprend une première roue dentée (180) disposée autour du premier pivot (174), et la quatrième patte (70) comprend une seconde roue dentée (180) disposée autour du second pivot (175), la première roue dentée (180) étant mise en prise avec la seconde roue dentée (180).

6. Dispositif selon la revendication 4, dans lequel la troisième patte (68) est accouplée à l'ensemble de liaison (56) au niveau d'un premier pivot (174), la quatrième patte (70) est accouplée à l'ensemble de liaison (56) au niveau d'un second pivot (175), la troisième patte (68) comprend une première butée oblique (182) disposée autour du premier pivot (174), la quatrième patte (70) comprend une seconde butée oblique (182) disposée autour du second pivot (175), et la première butée oblique (182) entre en prise avec la seconde butée oblique (182) quand l'affichage enroulable (38) est déployé.

7. Dispositif selon la revendication 4, dans lequel la première patte (58) est accouplée au second boîtier (34) au niveau d'un pivot (162) et la première patte (58) comprend un prolongement (184) en mesure de tourner autour du pivot (162), comportant par ailleurs un ressort (188) raccordé fonctionnellement entre le prolongement (184) et le second boîtier (34) pour solliciter l'affichage enroulable (38) jusqu'à une configuration déployée.

8. Dispositif selon l'une quelconque des revendications précédentes, dans lequel l'affichage enroulable (38) comprend un ressort à rouleaux (194) permettant d'exercer une force de fermeture pour solliciter l'affichage enroulable (38) jusqu'à une configuration enroulée.

9. Dispositif selon la revendication 8, comportant par ailleurs au moins un ressort raccordé fonctionnellement au mécanisme de déploiement (50) pour exercer une force d'ouverture pour solliciter l'affichage enroulable (38) jusqu'à une configuration enroulée.

10. Dispositif selon la revendication 8, comportant par ailleurs au moins un ressort raccordé fonctionnellement au mécanisme de déploiement (50) pour exercer une force d'ouverture pour solliciter l'affichage enroulable (38) jusqu'à une configuration déployée.

11. Dispositif selon la revendication 10, dans lequel ledit au moins un ressort est raccordé au mécanisme de déploiement (50) au niveau d'un emplacement sélectionné dans le groupe constitué par un emplacement se trouvant en travers du mécanisme de déploiement (50), et un emplacement entre le mécanisme de déploiement (50) et au moins l'un parmi le premier boîtier (32) et le second boîtier (34).

12. Dispositif selon la revendication 10, dans lequel la force d'ouverture est supérieure à la force de fermeture.

13. Dispositif selon la revendication 12, comportant par ailleurs un ensemble d'encliquetage (196) raccordé fonctionnellement entre le premier boîtier (32) et le second boîtier (34), l'ensemble d'encliquetage (196) maintenant l'affichage enroulable (38) dans la configuration enroulée quand l'ensemble d'encliquetage (196) est mis en prise.

14. Dispositif selon la revendication 10, dans lequel la force d'ouverture est inférieure à la force de fermeture.

15. Dispositif selon la revendication 14, comportant par ailleurs un ensemble d'encliquetage (198) raccordé fonctionnellement au mécanisme de déploiement (50), l'ensemble d'encliquetage (198) maintenant l'affichage enroulable (38) dans la configuration déployée quand l'ensemble d'encliquetage (198) est mis en prise.

16. Dispositif selon la revendication 10, dans lequel la force d'ouverture est approximativement égale à la force de fermeture.

17. Dispositif selon la revendication 16, comportant par ailleurs une commande à une main raccordée fonctionnellement au mécanisme de déploiement (50).

18. Dispositif selon la revendication 17, dans lequel le module électronique (36) est excité en réaction à l'actionnement de la commande à une main pour déployer l'affichage enroulable (38) à partir de la configuration enroulée.

19. Dispositif selon la revendication 10, dans lequel la force d'ouverture et la force de fermeture sont approximativement égales au cours d'une première partie d'avance, et la force d'ouverture et la force de fermeture sont inégales au cours d'une seconde partie d'avance.

20. Dispositif selon l'une quelconque des revendications précédentes, dans lequel le module électronique (36) est un module d'électronique pour un dispositif sélectionné dans le groupe constitué par un récepteur de système mondial de localisation (GPS), un téléphone mobile, un assistant numérique personnel (PDA), un lecteur de livres numériques, un visionneur de photos, un lecteur MP3, un visionneur de veille d'informations, un visionneur de vidéo en continu, un dispositif de vidéoconférence, une télécommande, et un guide d'émissions de divertissement.
